# EUROPEAN PATENT APPLICATION

(11) **EP 3 263 401 A1**
(43) Date of publication of application: **03.01.2018**
(21) Application number: 17176052.3
(22) Date of filing: 14.06.2017
(51) Int. Cl.: B60P 3/10

(54) **REAR PANEL UNIT AND A TRAILER WITH A REAR PANEL UNIT**

(30) Priority: 28.06.2016 SE 1650926
(71) Applicant: Brenderup AB, 553 13 Jönköping (SE)
(72) Inventor: Tjädermark, Anders, 561 46 Huskvarna (SE); Stork, Joakim, 555 94 Jönköping (SE); Tidstrand, Anders, 554 74 Jönköping (SE)
(74) Representative: Awapatent AB

(57) **Abstract**

Provided is a rear panel unit (1) adapted to be mounted on a trailer (100). The rear panel unit (1) comprises a main part (2) adapted to be fixedly attached to the trailer, an auxiliary part (3) and a connecting means (4) arranged to couple the auxiliary part (3) to the main part (2). The connecting means is further arranged to allow said auxiliary part (3) to move between a first position (10) and a second position (20) relative to the main part (2). The rear panel unit (1) further comprises a coupling unit (5) arranged to couple the main part (2) to the auxiliary part (3) in the first position (10). The coupling unit (5) further comprises an engaging member (52) and a receiving member (51), wherein the receiving member (51) is adapted to receive the engaging member (52), and wherein the receiving member comprises resistance means (511) such that when the engaging member (52) and the receiving member are engaged, the resistance means prevents the engaging member and receiving member from detachment.

## Description

### Technical Field

The present disclosure relates to a rear panel unit, and in particular to a fastening arrangement for a rear panel unit adapted to be mounted on a boat trailer.

### Background

There are many types of trailers on the market. A trailer is generally used to be towed behind a vehicle, for instance a car. The trailer can be designed for different transportation purposes. For instance an open trailer for transportation of loose items, gardening items such as plants, or larger items that can not fit in a car, such as furniture. The trailer can also be specially designed to transport animals like horses, or other vehicles, such as boats or motor cycles. Quite often the trailer has a rear panel on which auxiliary equipment such as lighting, number plate, signs, holders and the like is arranged. When loading a cargo onto the trailer, the rear panel needs to be moved so that the cargo can be loaded and/or unloaded without colliding with the rear panel. A way to solve this is to provide a detachable rear panel. The detachable panel can be fully detached and put aside on the ground when loading the cargo. A problem with this type of solution is that a user may forget the panel on the ground, and subsequently drive off without the equipment or even run it over with the car, which is of course both costly and a hassle. A way to solve this is to arrange a semi detachable panel, which is arranged to be released at one end, and moved to the side but still attached to the trailer on another side. In that way, it is ensured that the equipment always is attached to the trailer. In order to fasten the panel/equipment, a latch fastener may be used. However, a latch fastener usually requires several operation steps in order to attach and detach the panel, which is time consuming for the user. Also, using a latch fastener is a risk of pinching oneself during fastening. Therefore, there is a need for a better solution.

### Summary

It is an object of the present invention to provide an improved solution that alleviates the mentioned drawbacks with present devices. Furthermore, it is an object to provide a rear panel unit which can be operated in a single manoeuvre.

It is an object of the present invention to provide a rear panel unit which can be operated easily and swiftly while a cargo is to be loaded onto (or off) a trailer. The trailer may be any trailer that has a rear panel and/or equipment attached to the trailer that needs to be temporarily moved out of the way off a loading region during for instance loading or servicing.

This may be accomplished by a rear panel unit adapted to be mounted on a trailer. The rear panel unit comprises a main part adapted to be attached to the trailer, and an auxiliary part. The rear panel unit further comprises connecting means. The connecting means is arranged to permanently connect the auxiliary part to the main part and to connect the auxiliary part to the main part in a first position. The connecting means allows the auxiliary part to move between a first position and a second position relative to the main part. The rear panel unit further comprises a coupling unit arranged to couple the auxiliary part to the main part in the first position. The coupling unit comprises an engaging member and a receiving member. The receiving member is adapted to receive the engaging member. The receiving member comprises resistance means such that when the engaging member and the receiving member are engaged, the resistance means prevents the engaging member and receiving member from detachment.

A rear panel unit of the kind is easy to operate. The coupling unit may due to the engaging member and the receiving member allow coupling by a single manoeuvre operation, and may not require a two-hand grip, as current solutions may require. Since the auxiliary part and the main part are arranged to be permanently connected, there is no risk that the auxiliary part is detached from the main part and put on the ground, and subsequently forgotten or run over by the car. By "permanently connected", it is meant a connection which during normal use provides for a connection which is not detachable. By "normal use", it is mainly meant activities such as e.g. driving, loading, unloading or storing the trailer having the rear panel unit.

The auxiliary part is however movable relative to the main part, such as pivotable, rotational and/or slidable, depending on the connection. The connection may however be disassembled during service or replacement of parts. An engaging member and a receiving member may provide a single movement operation, and be kept in place securely by the resistance means. The resistance means may preferably be a part of the receiving member, and be arranged such that the engaging member, when fully received in the receiving member, is prevented from release. Preferably the resistance means is incorporated in the receiving member and does not need additional manipulation. This is an advantage since loading a cargo normally may be somewhat of an effort, and may require precision and muscle. In order to facilitate the entire activity of loading, the activities pre-loading and preparing the cargo as effortless as possible, may save time and effort for the operator. By allowing any auxiliary equipment be attached to the trailer with a rear panel unit according to the invention, the auxiliary equipment may be easily temporarily detached, and subsequently be attached again. The attachment may thus be performed in a single movement by pressing the engaging member into engagement with the receiving member. The detachment may be performed in a single movement by pulling the engaging member out of engagement from the receiving member. A single manoeuvre is advantageous in many ways. For example, during loading you may need your hands in many places at a time, and a swift manoeuvre may facilitate the entire operation. Further, when loading or unloading for instance a boat, a user needs to reverse the trailer close to the water. It is a possibility that the user forgets to move the auxiliary part beforehand. This leads to the fact that the user already stands at least partly in water. In such event it may be of great use to easily move the auxiliary part out of way without effort, since it may be harder to reach or harder to get a good grip if many manoeuvres are required.

In an embodiment, the engaging member may be brought into engagement with the receiving member by surpassing an obstructing means of the receiving member. This is an advantage, since the obstructing means may provide engagement when needed. The obstructing means may be for instance a narrow slot, a hole, a profile or the like that requires certain force for the engagement means to surpass. Preferably, the obstructing means are configured so that the engaging means may be brought into engagement after having applied a certain force to the coupling unit. Subsequently, the engaging member is brought into engagement with the receiving member and kept in place by the resistance means until a certain force is applied in the opposite direction, such that the engaging member disengages from the receiving member.

In one embodiment, the resistance means may be configured to prevent detachment of the engaging member for forces applied in a substantially linear direction. By substantially linear, it is meant in the longitudinal direction of the engagement member. Preferably, the longitudinal direction of the engagement member coincides with the direction of the initial movement of the auxiliary part relative to the main part upon release. The resistance means may also be configured to prevent detachment of the engaging member for vibration forces. This is an advantage since a trailer quite often may be affected by vibrations. This may be caused by for instance vibrations travelling from the towing vehicle and from the irregular load. Further, a trailer may be transported on bumpy terrain, such as bumpy forest paths or gravelled roads.

In one embodiment, the obstructing means may be resilient so that it yields for the engaging member when the engagement member is brought into engagement with the receiving member. To clarify, the obstruction means may bend, yield, give in by the forces applied by the engagement member when it passes the obstruction means and thereby is brought into engagement with the receiving member. The engagement member may thus be hard. By hard it is meant harder than the engagement member such that the receiving member gives in for the forces from the engaging member. The obstructing element may thus be a resilient component. A component of the type may be a bushing, a ring a coating or the like. It is also possible that the receiving member is spring loaded and that the resilience is obtained by the spring. The material may be any material suitable, such as an elastomeric material like rubber, silicone or another suitable resilient material. The resilient material may thus be adapted to withstand the forces and vibrations resulting from at least normal use of the trailer. The material may be a material resistant to corrosion. This may be an advantage since for instance a boat trailer may be used in salt water, which may be a corrosive environment. Further the use of a type of resilient material may prevent rattling. This may be since the resilient material is flexible enough to provide a close fit of the engaging member and may dampen any noise. In order to provide resistance, there may be friction between the engaging member and the receiving member. The coupling unit may further be sized to suit the specific installation and requirements. A trailer which is adapted to travel in a certain terrain or speed may for instance require a certain configuration of the coupling unit, while another trailer may require another configuration of the coupling unit.

In one embodiment, the obstruction means forms an integral part of the resistance means. This means that the obstruction means may be construed of the resilient material and also may form the resistance means. For instance, the obstructing means may be that the resilient material forms a narrow entrance of the receiving member. When the engaging member is kept in place by the receiving member, any friction of the receiving member may form part of the resilient means, as well as the obstructing means.

In one embodiment, the engaging member may be a ball stud. Further, the receiving member may be a socket. This type of coupling may provide a steady and substantially rattle free connection. The ball stud may be configured such that it comprises a ball on an engaging end. The ball may be received in the socket. The socket may be resilient, and give in by the force applied from the ball when pushed into engagement. The entrance of the socket may thus have a narrower circumference than that of the boll. The socket may thus, when engaged, substantially enclose the ball. In that way, the socket may hold the ball in place. The socket may be of a resilient material. The ball stud may be of a harder material, at least a material with a hardness that may be received by the receiving member and retained in the receiving member. The socket may be arranged on the main part as required. Alternatively, the socket may be provided on the auxiliary part. The main part, or the auxiliary part, may thus be adapted to include a socket. In the same way, the ball stud may be arranged on a corresponding part, either main part or the auxiliary part. It is of course possible that the coupling unit may be attached to a distance piece or the like in direct connection to the main part or the auxiliary part in order to be provided on the right distance to the main/auxiliary part.

In one embodiment, the connecting means may comprise a rail and corresponding gripping means. The gripping means may be arranged to move along said rail. An example of a rail type connecting means with corresponding gripping means may be for instance wherein a rail is in the shape of a slot and a corresponding gripping means is in the shape of a stud/screw/pin. In that case the stud may be arranged to slide in the slot in order to obtain a relative movement between the auxiliary part and the main part. The slot may be linear or a splined path. Another example is that the corresponding gripping means may also be rollers arranged to roll along the rail at a certain path in order to lead the auxiliary part. By providing a rail and corresponding gripping means, the auxiliary part may be led towards any position, and still be connected to the main part and/or trailer. The rail may equally be either linear or provide a non linear path.

In one embodiment, the pivotal connecting means may comprise a hinge which may allow pivotal movement of the auxiliary part relative to the main part. In that way, the auxiliary part may be allowed to rotationally move relative to the main part at an angle suitable. Preferably, the hinge may allow a pivot such that the auxiliary part moves out of a loading region when attached to a trailer. The hinge may be arranged so that the rotational movement may be done in the plane parallel to the ground, i.e. towards the sides of the trailer. Alternatively, the hinge may be arranged to allow rotation in another suitable direction, for instance downwards.

Alternatively, the connecting means may be another type of pivoting means that may provide a pivoting movement in more than two dimensions. This may be a swivel joint or the like.

In some embodiments a rail and corresponding gripping means may be used in combination with a hinge, or any other suitable pivotable means. For instance, the auxiliary part may be arranged to be pushed in a longitudinal direction in a slot, and when in a certain position be pivoted towards an angle in order to obtain a second position. The combination of the two may be done in any suitable order.

In one embodiment, the auxiliary part may comprise one of the following: a lamp unit, a number plate, a sign, a cable holder, equipment holder. This is an advantage, since for instance a lamp unit or a licence number plate, which normally must be on a trailer towed by a car, may be in the way while loading cargo. It is a great advantage to be able to move the auxiliary part out of way. Especially, it may be an advantage to be able to swing the auxiliary part with a single manoeuvre.

In one embodiment, the rear panel unit further may comprise a keeper arranged to keep the auxiliary part in a second position. This is an advantage, since when in a second position, it may be undesirable that the auxiliary part ay accidentally move out of position. If the auxiliary part is allowed to move uncontrollably, it may damage the cargo during loading. The keeper may for instance be a wire, a snap type lock, a hasp, a latch or the like.

A second aspect of the invention is to provide a trailer for transporting cargo. The trailer comprises at least one rear panel unit according to an embodiment as previously described.

In one embodiment, the auxiliary part may be movable between a first position and a second position. In one embodiment, the auxiliary part is movable between a first position and a second position at an opening angle relative to the first position. The opening angle may be at least 90 degrees. This is an advantage since this may ensure that the rear panel unit stays clear of a loading region. The loading region may extend across a major part of the trailer from one side to the other where a cargo may be loaded.

In one embodiment, the opening angle may be at least 180 degrees. This is an advantage since an opening angle of 180 degrees ensures that the whole trailer remains as short as possible, which may be an advantage when reversing for instance.

In one embodiment, the opening angle may be about 250-270 degrees, or more. An opening angle as large as possible may provide a rear panel unit which does not substantially extend further to the side than the distal end. This is an advantage since the auxiliary part, when in a second position, does not add either considerable length or width to the trailer.

In one embodiment, the trailer may be a boat trailer. Quite often the type of rear panel unit may be well needed on a boat trailer. This is because a boat trailer loads and unloads its cargo near water. It may therefore be easier to avoid putting the rear panel unit aside, since it may end up in water, or be run over while reversing the vehicle towards the water for loading or unloading the boat. Since a boat is wide, the lamp units on either left or right side on the rear may collide with the cargo during loading and/or unloading. It may therefore be a great advantage to be able to move them out of way, using as few operation steps as possible, preferably one, and the only use of one hand. Of course, it has its advantages to use a rear panel unit on any trailer for of any use.

While the present invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

### Brief Description of the Drawings

The invention will in the following be described in more detail with reference to the enclosed drawings, wherein:
Fig. 1 shows a perspective view of a rear panel unit according to an embodiment,
Fig. 2 shows a perspective view of a rear panel unit according to an embodiment,
Fig. 3 shows a top view of a rear panel unit in a first position according to an embodiment,
Fig. 4 shows a top view of a rear panel unit in a second position according to an embodiment,
Fig. 5 shows a perspective view of a rear panel unit according to an embodiment with a type of connection means,
Fig. 6 shows a perspective view of a rear panel unit according to an embodiment with a type of connection means in an innermost position,
Fig. 7 shows a perspective view of a rear panel unit according to an embodiment with a type of connection means in an outermost position,
Fig. 8 shows a perspective view of a rear panel unit according to an embodiment with a type of connection means in a first position,
Fig. 9 shows a perspective view of a rear panel unit according to an embodiment with a type of connection means in a second position,
Fig. 10 shows a schematic view of a coupling unit according to an embodiment,
Fig. 11 shows a rear side of a trailer with a rear panel unit according to an embodiment of the invention, and
Fig. 12 shows a perspective view of a trailer with a rear panel unit according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

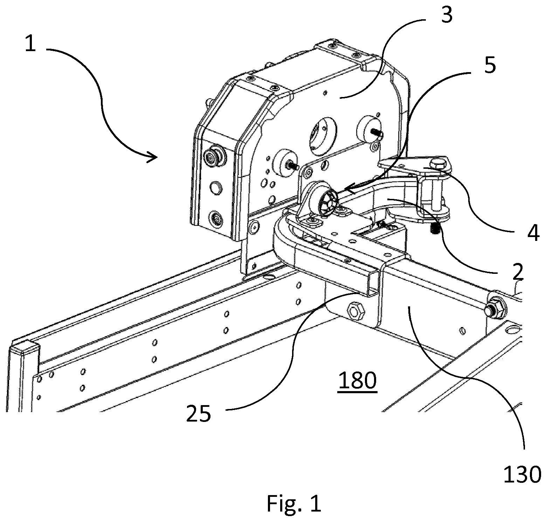

In fig. 1 it is shown a perspective view of a rear panel unit 1 according to an embodiment of the invention. The rear panel unit 1 has a main part 2 and an auxiliary part 3. The main part 2 is attachable to a trailer, not shown, via a frame connector 25. The main part 2 can be attached to a side beam 130 on the trailer, such that is fixed, for instance by screws or by welding. It may be an advantage if the frame connector is detachable, in the event of servicing or cleaning. In fig. 1, the auxiliary part 3 and the main part 2 are connected to each other via connecting means 4, such as a hinge. The connection between the main part 2 and the auxiliary part 3 is a permanent connection. To clarify, the auxiliary part 3 is configured to be permanently connected to the main part 2 in order to prevent the auxiliary part to be removed and forgotten. The auxiliary part may however comprise means for detachment or disassembly during service or replacement of parts. The hinge allows the auxiliary part 3 to rotationally move relative the main part 2 between a first 10 and a second position 20. In the arrangement of figs. 1-9 the rotation is enabled in a horizontal plane, out towards the side of the trailer. The movement may however be in another suitable direction, such as diagonally upwards. The rear panel unit 1 has a coupling unit 5 which connects the auxiliary part 3 to the main part 2 in a first position10. The first position 10 is a position when the auxiliary part 3 is arranged towards the main part 2, and when the trailer is ready for use. The coupling unit 5 ensures that the auxiliary part 3 and the main part 2 does not accidentally detach. During operation of the trailer, the auxiliary part 3 is normally coupled via the coupling unit 5 to the main part 2, to keep the auxiliary part 3 in place. In Fig.1 the coupling unit 5 is arranged at a distance from the connecting means so as to create a lever arm and more efficiently hold the auxiliary part 3 in the first position 10.

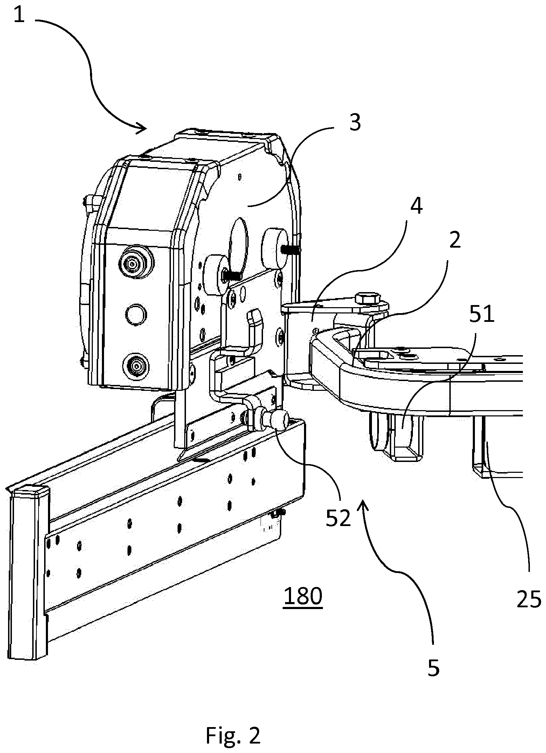

Fig. 2 is similar to the embodiment show in fig. 1, with the difference that the coupling unit 5 is arranged at another location than in fig. 1. The coupling unit 5 is here arranged below the main part 2. Depending on the equipment to be attached by the auxiliary part, the coupling unit 5 may be arranged anywhere suitable. Fig. 2 shows the coupling unit 5 in a disengaged state. As seen, the coupling unit has a receiving member 51 and an engaging member 52. The receiving member 51 is adapted to receive the engaging member 52. When engaged, the engaging member 51 is placed inside the receiving member 52.

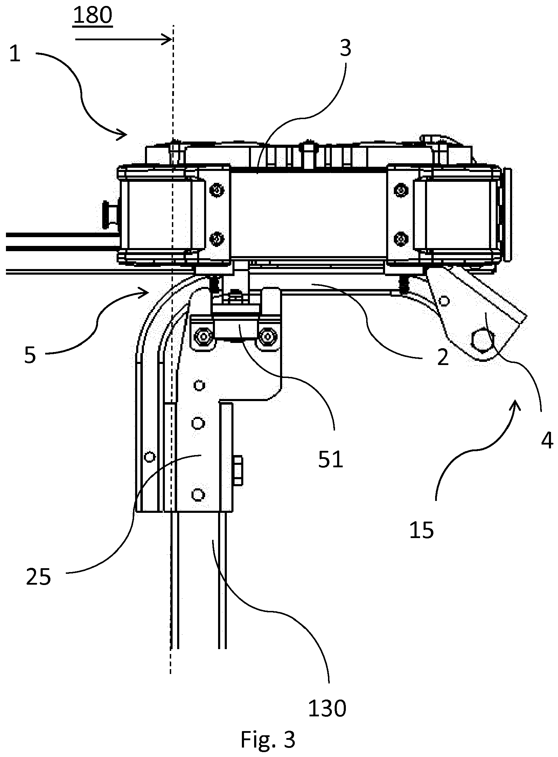

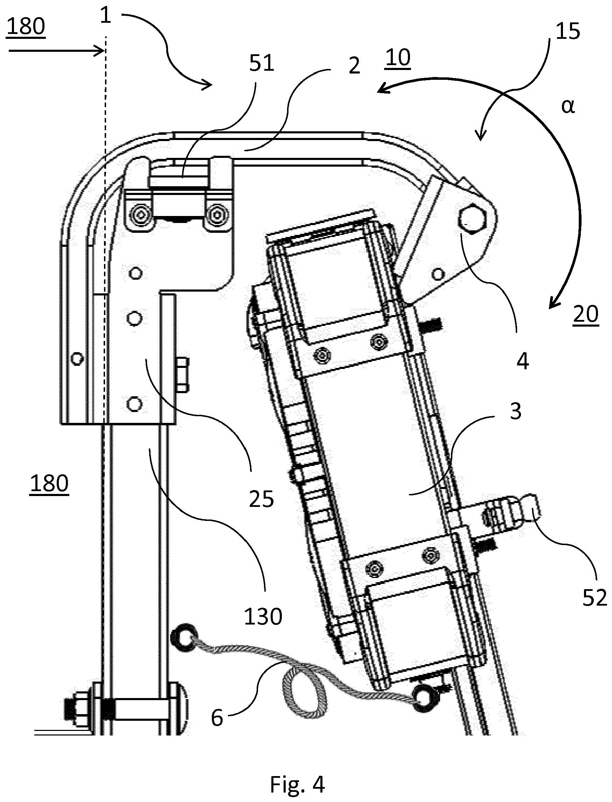

Referring now to figs. 3 and 4, wherein a top view of a rear panel unit 1 according to an embodiment of the invention is shown. In fig. 3, the auxiliary part 3 is in a first position 10. In this first position 10, the coupling unit 5 can be engaged. In fig. 4, the auxiliary part 3 is in a second position 20, and thereby pivoted away from the main part 2. The connecting means 4 is here a hinge and is arranged to allow the auxiliary part 3 to pivot by an opening angle α. The opening angle α depends on the hinge used, but it is preferable that an opening angle α such that the auxiliary part stays clear of a loading region 180 of the trailer 100, in order to avoid collision. E.g. the opening angle α may be about 90 degrees, about 180 degrees or about 250-270 degrees. When in a second position 20, the auxiliary part 3 may be held in place by a keeper 6. In that way, the risk that the auxiliary part accidently swings uncontrollably by the hinge 4 when loading and/or unloading a cargo may be reduced. The keeper may be a wire, hasp, a magnet or the like.

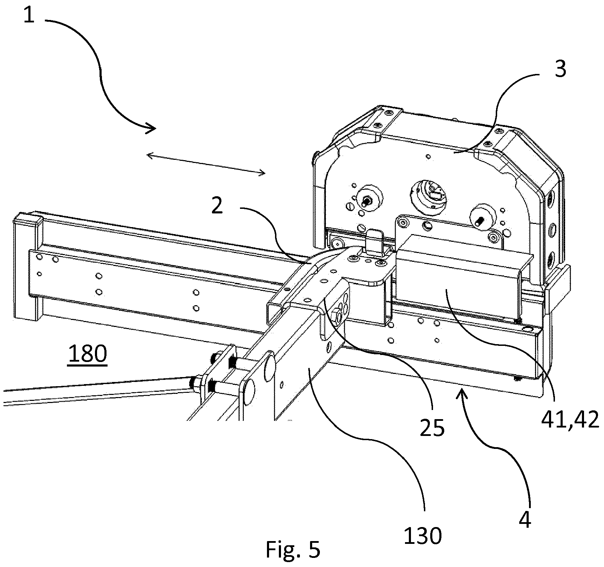

Referring now to figs. 5-9, showing alternative embodiments. The connection means 4 is here a rail 41 and corresponding gripping means 42. In fig. 5, the rail 41 and corresponding gripping means 42 are arranged to allow movement sideways, moving the auxiliary part 3 towards the side of the trailer. The rail can be arranged along a length of the rear panel unit 1. For instance, if the rear panel is a number plate, the rail can be arranged along at least a part of or the entire length of the number plate, in order to move the number plate out of way. The coupling unit, not shown, may be arranged so that it engages when the auxiliary part is brought to its first position. In the same way, it may disengage when moved out of position along the rail. The longitudinal direction of the coupling unit, i.e. the direction for engagement along which the engaging member engages in the receiving member may coincide with the moving direction of the auxiliary part 3.

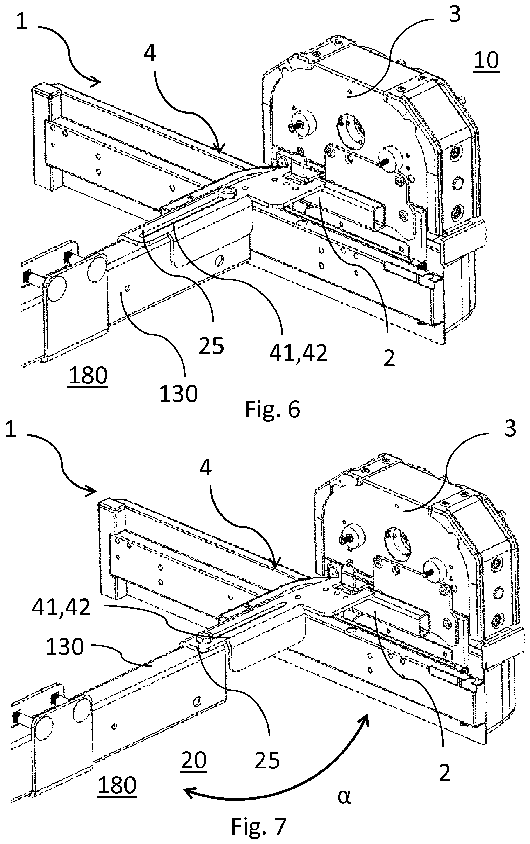

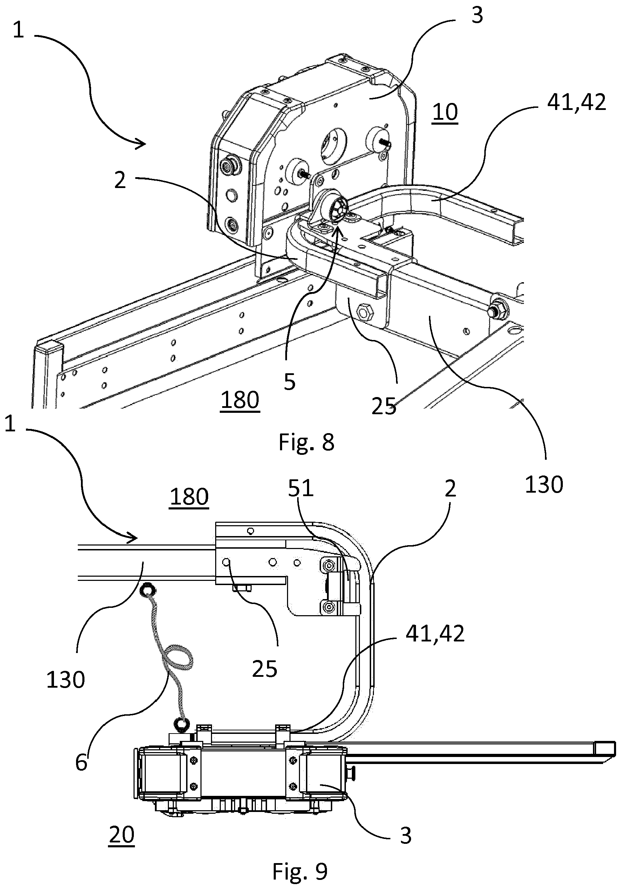

In figs. 6 and 7, the connection means is also a rail 41 and corresponding gripping means 42. In this specific installation the rail 41 is a longitudinal slot arranged in the frame connector, and the gripping means 42 is a screw/pin arranged in the beam and adapted to slide in the slot. The slot is arranged to allow movement in a longitudinal direction of the beam 130. In its first position 10, the rear panel unit 1 is in its innermost position, as shown in fig. 6. When sliding the panel unit 1 backwards towards an end of the slot, as shown in fig. 7, the panel unit becomes free and may be able to rotate around the screw towards the second position 20. In figs. 8 and 9, the rail 41 forms part of the main part 2, extending in a path for the auxiliary part 3 to move along. In figs. 8 and 9, the rail 41 extends at an angle α relative to the beam. In that way, the auxiliary part can move along the rail towards a side of the trailer. In all the described alternative embodiments shown in figs. 5-9, a coupling unit may be used to couple the main part 2 with the auxiliary part 3 in the first position 10. It is to be understood that the coupling unit 5 can be arranged anywhere suitable, for instance so that the auxiliary part 3 couples the coupling unit 5 from either the front, back or from the side, depending on the movement allowed by the connection means 4.

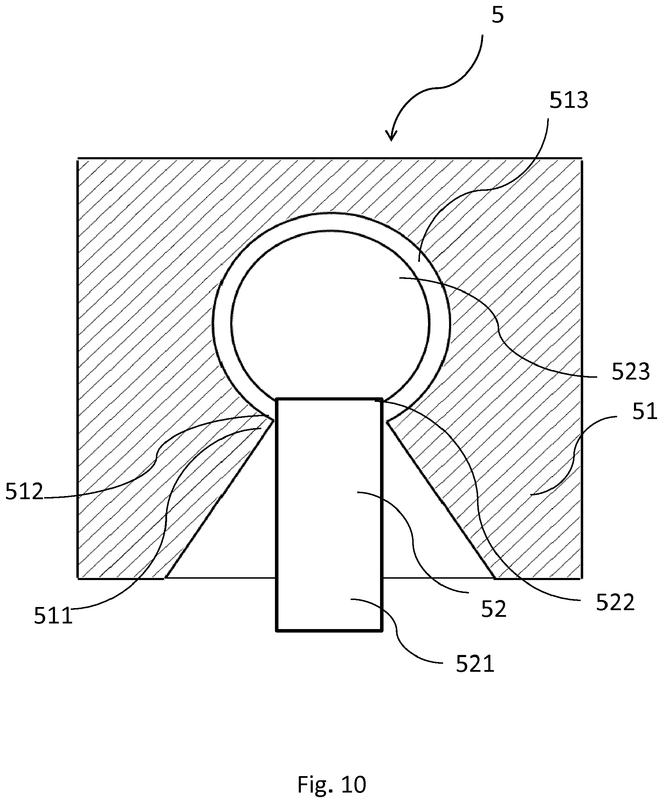

Referring now to fig. 10, showing a schematic view of a coupling unit 5 as described and relevant to all embodiments. The coupling unit 5 comprises an engaging member 52 and a receiving member 51. Upon connection, the receiving member 51 receives the engaging member 52. The engaging member 52 may be a ball stud. The ball stud comprises a ball 523 at an engaging end of the ball stud, and a stud 521 at the opposite end. Between the ball 523 and the stud 521 is a neck 522, on which the ball 523 is attached. The receiving member comprises a space 513 in which the ball 523 may be enclosed. In order to ensure engagement, the receiving member comprises an obstructing means 512. The obstructing means shown in fig. 10 is a circumferential inward collar 513 which has a diameter smaller than that of the ball 523. The receiving part 51 may hence be resilient in order to allow the ball 523 to enter the receiving member 52, and surpass the obstructing means. While coupled, the receiving member 51 encloses a part of the ball 523, and the inward collar 513 is arranged towards the neck 522. In order to prevent accidental disengagement, the receiving member 51 comprises resistance means 511. The resistance means 511 may be integral with the receiving member 51. For instance, the resistance means 511 may be provided by friction between the engaging member 52 and the receiving member 51. Further, the inward collar 513 may provide resistance means 511 such as to prevent accidental detachment. The obstructing means 512 may thus be an integral part of and the resistance means 511. The resilience of the receiving member 51 may be determined based on the specific requirements on the installation based on for instance use and other conditions. For instance, a trailer adapted for use in bumpy terrain may require a steadier coupling unit, and thus be prepared for that. That may be accomplished by e.g. choosing a harder material or larger size of the ball 523 relative the obstructing/resistance means 512/511 which may require higher force to engage with the engaging member 52, and thereby harder to disengage. The coupling unit 5 may hence be dimensioned and adapted depending on the installation, and the purpose and placement of the auxiliary part 3.

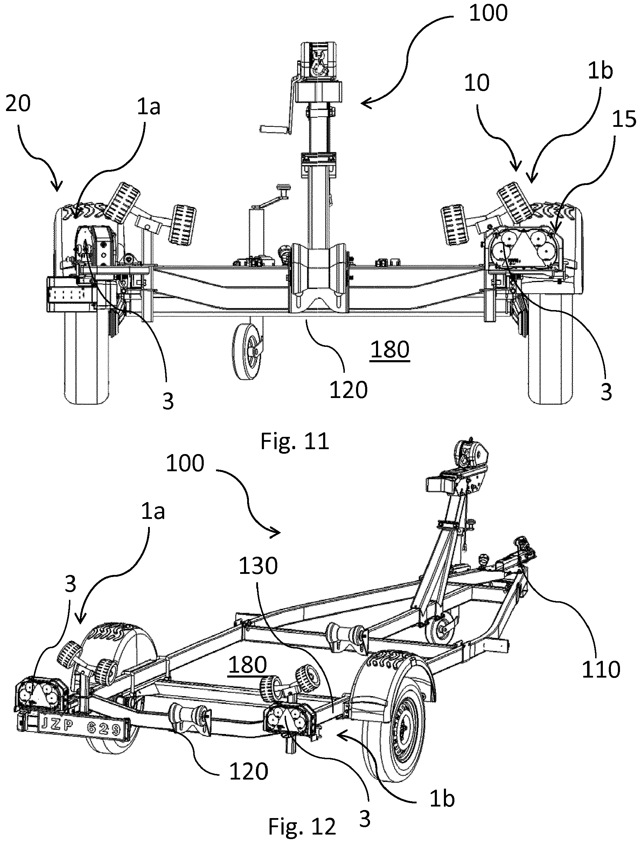

Referring to figs. 11 and 12, which show a trailer 100 having a rear panel unit mounted onto the rear of the trailer 100. This specific trailer is configured to transport boats. The trailer has a towing end 110 and a rear end 120. On the rear end 120 it is shown two rear panel units 1 a, 1 b, each holding a lamp unit. The rear panel units 1 are each connected to the trailer 1 on a side beam. In fig. 5, one rear panel unit 1 a is shown when the auxiliary part is in a second position 20, and swung off to the side relative to the main part 2. The other rear panel unit 1b is shown when the auxiliary part 3 is in a first position 10, and thereby placed close to the main part 2. As can be seen, when the rear panel unit 1 is rotated to the side in a second position 20, it leaves a clear way to load the boat. Since a boat normally is loaded from the rear, any parts on the rear end 120 of the trailer 100 must be moved out of way to avoid collision. In fig. 6, the solution is shown in a perspective view.

In figs. 11 and 12, with exemplary clarifying reference to figs. 3-4, the rear panel unit 1 is connected to a side beam 130 of a trailer 100. The main part 2 of the rear panel member 1 is connected to a side beam 130 on a frame of a trailer 100 via a frame connector 25. The connection is such that a distal end 15 of the rear panel unit 1 is, when in a first position 10, placed to a far side of the trailer 1. The hinge 43 is also placed at a distal end 15, and may represent the side of the rear panel unit 1 that is arranged most far to the side, as seen from the rear end 120. This results in that when the auxiliary part 3 is disengaged from the main part 2, and pivoted to its side, the rear panel unit 1 stays entirely clear off the loading region 180 of the trailer 100. The connecting means may be arranged to allow a pivoting opening angle α of at least about 90, 180 or up to 270 degrees.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A rear panel unit (1) adapted to be mounted on a trailer (100), the rear panel unit (1) comprising
a main part (2) adapted to be attached to the trailer,
an auxiliary part (3) and
a connecting means (4) arranged to connect the auxiliary part (3) to the main part (2),
wherein the connecting means (4) is arranged to permanently connect the auxiliary part (3) to the main part (2), and to allow said auxiliary part (3) to move between a first position (10) and a second position (20) relative to the main part (2), the rear panel unit (1) further comprising
a coupling unit (5) arranged to couple the main part (2) to the auxiliary part (3) in the first position (10),
wherein the coupling unit (5) comprises
an engaging member (52) and
a receiving member (51), wherein the receiving member (51) is adapted to receive the engaging member (52), and wherein the receiving member comprises resistance means (511) such that when the engaging member (52) and the receiving member are engaged, the resistance means prevents the engaging member and receiving member from detachment.

2. Rear panel unit according to claim 1, wherein the engaging member (52) is brought into engagement with the receiving member (51) by surpassing an obstructing means (512) of the receiving member (51).

3. Rear panel unit according to claim 2, wherein the obstructing means (512) is made from a resilient material so that it yields for the engaging member (52) when the engagement member is brought into engagement with the receiving member.

4. Rear panel unit according to any of the claims 2-3, wherein the obstructing means (512) forms integral part of the resistance means (511).

5. Rear panel unit according to any of the claims 1-4, wherein the engaging member (52) is a ball stud and the receiving member (51) is a socket.

6. Rear panel unit according to any of the preceding claims, wherein the connecting means (4) comprises a rail (41) and corresponding gripping means (42), wherein the gripping means (42) is arranged to move along said rail (41).

7. Rear panel unit according to any of the claims 1-6, wherein the connecting means (4) comprises a hinge (43) which allows pivotal movement of the auxiliary part (3) relative to the main part.

8. Rear panel unit according to any of the preceding claims, wherein the auxiliary part (3) comprises one of the following: a lamp unit, a sign, a number plate, a cable holder, equipment holder.

9. Rear panel unit according to any of the preceding claims, further comprising a keeper (6) arranged to keep the auxiliary part (3) in a second position (52).

10. Rear panel unit according to any of the preceding claims, further comprising a locking arrangement for securing the engaging member (52) in the receiving member (51), wherein the locking arrangement is from the group comprising a pin, a clip, a peg or the like.

11. A trailer 100 for transporting cargo, comprising at least one rear panel unit 1 according to claim 1-10.

12. Trailer 100 according to claim 11, wherein the auxiliary part (3) is movable between a first position (10) and a second position (20), wherein the second position (20) is at an opening angle (α) relative to the first position (10), wherein the opening angle (α) is at least 90 degrees.

13. Trailer according to claim 11, wherein the opening angle (α) is at least 180 degrees.

14. Trailer according to any of the claims 11-13, wherein the trailer is a boat trailer.
